# EUROPEAN PATENT SPECIFICATION

(11) **EP 3 020 757 B1**
(45) Date of publication and mention of the grant of the patent: **30.05.2018**
(21) Application number: 14823504.7
(22) Date of filing: 18.06.2014
(51) Int. Cl.: C08L 9/02, C08K 3/04, C08K 5/18, C08K 5/372, F16C 33/72, F16J 15/32

(54) **NITRILE RUBBER COMPOSITION**
NITRILKAUTSCHUKZUSAMMENSETZUNG
COMPOSITION DE CAOUTCHOUC NITRILE

(30) Priority: 11.07.2013 JP 2013145464
(43) Date of publication of application: 18.05.2016
(73) Proprietor: NOK Corporation, Minato-ku Tokyo 105-8585 (JP)
(72) Inventor: YAMOTO Hiromitsu, Fujisawa-shi Kanagawa 251-0042 (JP); KOMIYA Eiji, Fujisawa-shi Kanagawa 251-0042 (JP); AOYAGI Yuichi, Fujisawa-shi Kanagawa 251-0042 (JP); FURUKAWA Tomonori, Fujisawa-shi Kanagawa 251-0042 (JP)
(74) Representative: Beckmann, Claus
(86) International application number: PCT/JP2014/066134
(87) International publication number: WO 2015/005080

(56) References cited:
- JP-A- 2004 115 637
- JP-A- 2011 140 976
- JP-A- 2012 097 213

## Description

### TECHNICAL FIELD

The present invention relates to a nitrile rubber composition. More particularly, the present invention relates to a nitrile rubber composition that can yield a vulcanization molded product having excellent muddy water resistance, low torque characteristics, and the like.

### BACKGROUND ART

Due to recent global environmental problems, weight saving and reduction in fuel consumption have been strongly desired in the vehicle industry. In response to this trend, reduction in torque is required for rotation system parts, such as oil seals, among vehicle parts in order to improve the fuel consumption of vehicles. Reduction in torque is also required for wheel rolling bearings (hub bearings). On the other hand, wheel rolling bearings are used outdoors, and in extreme cases, are used in a harsh environment in which they are exposed to muddy water. Thus, their elastic members (oil seals) are further required to have muddy water resistance; however, muddy water resistance has a contradictory relationship with torque performance.

For the purpose of imparting muddy water resistance to rolling bearing oil seals, an addition of clay to nitrile rubber is proposed. However, conductivity is often required for recent rolling bearing oil seals to take measures against radio noise generated by static electricity during running or stopping. Since the addition of clay leads to a significant decrease in conductivity, there is a limitation not to be able to apply it to conductivity applications.

Moreover, calcium chloride as a snow melting agent and sodium chloride as an antifreezing agent and the like are sprayed on roads in snowy areas (cold areas). Wheel rolling bearings are to be used also in such an environment. After a vehicle runs on a road on which an antifreezing agent has been sprayed, the lower part of the vehicle body is generally washed with water in order to prevent rust of metal (iron) parts of the vehicle.

When an oil seal is exposed to an antifreezing agent aqueous solution, it is considered, in an extreme case, that the aqueous solution becomes an electrolyte solution, and that an electric potential difference is generated between a conductive rubber, which is an oil seal constituent material, and a metal, such as a wheel shaft, thereby causing electric energization. Iron is ionized in a process leading to the electric energization, and the ionized iron serves as a catalyst to promote the oxidative degradation of the rubber used as a sealing material, increasing the swelling of the rubber in water. In particular, in the case of an oil seal, the inside of a rubber lip is fixed by adhering to a metal ring; thus, when the swelling increases, the outside of the lip may probability undergo wavy deformation.

Furthermore, nitrile rubber is generally used as the material for oil seals for wheel rolling bearings in terms of material properties and cost; however, nitrile rubber contains butadiene units that are susceptible to oxidation in terms of their chemical structure. Among nitrile rubbers, nitrile rubber with a low acrylonitrile content has excellent low-temperature characteristics, and thus tends to be used particularly in cold areas. Since the nitrile rubber with a low acrylonitrile content contains relatively large amounts of butadiene units, its chemical structure is considered to be more susceptible to oxidation.

The present applicant has previously proposed a nitrile rubber composition that maintains characteristics as a conductive material, satisfies muddy water resistance and sealing properties required for oil seals for wheel rolling bearings for vehicles, etc., and can further achieve low torque characteristics. The nitrile rubber composition comprises 5 to 50 parts by weight of carbon black, 5 to 60 parts by weight of graphite having an average particle diameter of 5 µm or less, and 5 to 50 parts by weight of conductive carbon other than these carbon black and graphite, based on 100 parts by weight of nitrile rubber (Patent Document 1).

Rubber vulcanization molded products that are vulcanization-molded from nitrile rubber compositions, containing only diphenylamine reaction product with styrene and 2,4,4-trimethylpentene as antioxidant, disclosed in the Examples of this prior art document satisfy muddy water resistance and sealing properties, as well as low torque characteristics; however, the rubber volume change coefficient is large when the product is washed with water after exposure to an antifreezing agent, as shown in Comparative Example 2, provided later. Improvement is required in this respect.

### PRIOR ART DOCUMENT

### PATENT DOCUMENT

Patent Document 1 : JP-A-2012-97213

### OUTLINE OF THE INVENTION

### PROBLEM TO BE SOLVED BY THE INVENTION

An object of the present invention is to provide a nitrile rubber composition that can yield a vulcanization molded product, besides maintaining characteristics as a conductive material, satisfying muddy water resistance, sealing properties, and low torque characteristics required for rolling bearing oil seals for vehicles, etc., and having a rubber volume change coefficient kept low when the product is washed with water after exposure to an antifreezing agent.

### MEANS FOR SOLVING THE PROBLEM

The above object of the present invention can be achieved by the nitrile rubber composition defined in claim 1 and the rubber vulcanization molded product that is vulcanization-molded therefrom.

### EFFECT OF THE INVENTION

A rubber vulcanization molded product that is vulcanization-molded from the nitrile rubber composition of the present invention has excellent effect of besides maintaining characteristics as a conductive material, satisfying muddy water resistance, sealing properties, and low torque characteristics required for rolling bearing oil seals for vehicles, etc., and having a rubber volume change coefficient kept low even when the product is washed with water after exposure to a snow melting agent or an antifreezing agent.

### EMBODIMENTS FOR CARRYING OUT THE INVENTION

The NBR used herein is acrylonitrile-butadiene rubber having a bound acrylonitrile content of 15 to 48%, preferably 22 to 35%, and a Mooney viscosity ML₁₊₄(100°C) of 25 to 85, preferably 30 to 60. Practically, commercial products, such as N240S and N241 (produced by JSR Corporation), can be used as they are. To the NBR, carbon black, graphite having a specific average particle diameter, conductive carbon other than these carbon black and graphite, and a mixture of alkylated diphenylamine comprising a diphenylamine reaction product with styrene and 2,4,4-trimethylpentene, and N,N'-di-2-naphthyl-p-phenylenediamine or dilauryl thiodipropionate as an antioxidant are added to prepare the NBR composition of the present invention as defined in claim 1.

As the carbon black, SRF or HAF is used at a ratio of 5 to 50 parts by weight, preferably 15 to 40 parts by weight, based on 100 parts by weight of NBR. When the amount of carbon black used is less than this range, the material strength is insufficient. In contrast, when the amount of carbon black used is greater than this range, the material hardness is overly high, which is not preferable.

The graphite used herein has an average particle diameter (measured by Microtrac HRA9320-X100, produced by Nikkiso Co., Ltd.) of 5 µm or less, preferably 1 to 5 µm. When the average particle diameter of graphite is greater than this range, the torque value increases, and a reduction in torque, which is the object of the present invention, cannot be achieved. As the graphite, a commercial product having such an average particle diameter can generally be used as it is at a ratio of 5 to 60 parts by weight, preferably 10 to 60 parts by weight, based on 100 parts by weight of NBR. When the amount of graphite used is less than this range, the effect of reducing torque cannot be obtained. In contrast, when the amount of graphite used is greater than this range, the processability is reduced, which is not preferable.

The conductive carbon other than the carbon black and graphite is Ketjenblack or acetylene black. Such conductive carbon is used at a ratio of 5 to 50 parts by weight, preferably 5 to 40 parts by weight, based on 100 parts by weight of NBR. When the amount of conductive carbon used is less than this range, the volume resistivity increases. In contrast, when the amount of conductive carbon used is greater than this range, the material hardness is overly high, which is not preferable.

Carbon black, graphite, and conductive carbon other than these carbon black and graphite are used in a total amount of 15 to 100 parts by weight, preferably 15 to 80 parts by weight, based on 100 parts by weight of NBR. When the total amount of these is less than this range, the volume resistivity increases. In contrast, when the total amount of these is greater than this range, the material hardness is overly high, which is not preferable.

For vulcanization of NBR compounded with carbon black, graphite, and conductive carbon other than these carbon black and graphite, any vulcanization systems, such as sulfur vulcanization and peroxide vulcanization, can be used singly or in combination; however, a sulfur vulcanization system is preferably used.

The antioxidant used is a mixture of alkylated diphenylamine comprising a diphenylamine reaction product with styrene and 2,4,4-trimethylpentene, and N,N'-di-2-naphthyl-p-phenylenediamine or dilauryl thiodipropionate. Alkylated diphenylamine comprising a diphenylamine reaction product with styrene and 2,4,4-trimethylpentene is used at a ratio of 1 to 5 parts by weight, preferably 2 to 4 parts by weight, based on 100 parts by weight of NBR. N,N'-di-2-naphthyl-p-phenylenediamine or dilauryl thiodipropionate is used at a ratio of 0.5 to 2.5 parts by weight, preferably 1 to 2 parts by weight, based on 100 parts by weight of NBR. When only one of these antioxidants is used, the desired salt water resistance cannot be achieved. In contrast, even when these two antioxidants are both used, if one or both of them are used in an amount of more than specified, the scorch time becomes short.

In addition to the above essential components, various compounding agents generally used in the rubber industry are suitably added to the composition. Examples of compounding agents include, in the case of sulfur vulcanization, sulfur-donating compound vulcanization accelerators, such as thiurams and sulfenamides; and in the case of peroxide crosslinking, polyfunctional unsaturated compound co-crosslinking agents, such as triallyl (iso)cyanurate, trimethylolpropane tri(meth)acrylate, and triallyl trimellitate; reinforcing agents other than carbon black, such as silica and activated calcium carbonate; fillers, such as talc and calcium silicate; processing aids, such as stearic acid, palmitic acid, and paraffin wax; acid acceptors, such as zinc oxide, magnesium oxide, and hydrotalcite; plasticizers, such as dioctyl sebacate (DOS); and the like.

The preparation of the composition is performed by kneading the components using a kneading machine, such as an Intermix, kneader, or Banbury mixer, or using an open roll. The vulcanization of the composition is generally performed by heating at about 160 to 200°C for about 3 to 30 minutes using an injection molding machine, compression molding machine, vulcanizing press, or the like. Further, if necessary, secondary vulcanization is performed by heating at about 140 to 160°C for about 0.5 to 10 hours.

### EXAMPLES

The following describes the present invention with reference to Examples.

### Example 1

| | |
|---|---|
| Nitrile rubber (JSR N240S, produced by JSR Corporation; AN content: 26%, Mooney viscosity ML₁₊₄(100°C): 56) | 100 parts by weight |
| Carbon black (Seast S-SVH, produced by Tokai Carbon Co., Ltd.) | 25 parts by weight |
| Graphite (HOP, produced by Nippon Graphite Industries, Co., Ltd.; average particle diameter: about 3 µm) | 30 parts by weight |
| Ketjenblack (EC-600JD, produced by Lion Corporation) | 7 parts by weight |
| Zinc oxide (produced by Sakai Chemical Industry Co., Ltd.) | 10 parts by weight |
| Stearic acid (produced by Miyoshi Oil & Fat Co., Ltd.) | 1 part by weight |
| Wax (Suntight R, produced by Seiko Chemical Co., Ltd.) | 2 parts by weight |
| Diphenylamine reaction product with styrene and 2,4,4-trimethylpentene (Nocrac ODA-NS, produced by Ouchi Shinko Chemical Industrial Co., Ltd.) | 4 parts by weight |
| N,N'-di-2-naphthyl-p-phenylenediamine (Nocrac White, produced by Ouchi Shinko Chemical Industrial Co., Ltd.) | 2 parts by weight |
| Plasticizer (Vulkanol OT, produced by Lanxess) | 9 parts by weight |
| Sulfur (produced by Tsurumi Chemical Industry Co., Ltd.) | 1 part by weight |
| Vulcanization accelerator (Nocceler TT, produced by Ouchi Shinko Chemical Industrial Co., Ltd.) | 2.8 parts by weight |
| Vulcanization accelerator (Nocceler CZ, produced by Ouchi Shinko Chemical Industrial Co., Ltd.) | 3.8 parts by weight |

The above blending components were kneaded with a kneader and an open roll, and the compound characteristics (Mooney viscosity and scorch time) were measured. The kneaded product was then subjected to press vulcanization at 170°C for 10 minutes and oven vulcanization at 150°C for 30 minutes, thereby producing test pieces (250 x 120 x 2 mm and 50 x 20 x 0.2 mm). The obtained test pieces were used to measure normal state physical properties and perform a dipping test.

Compound characteristics: According to JIS K6300-1: 2001 (Mooney test) corresponding to ISO 289-1 : 1994, ISO 289-2:1994

The minimum Mooney viscosity at 125°C and scorch time T5 were measured. The scorch time is preferably 6 minutes or more in terms of the compound stability and the vulcanizing and molding properties

Normal state physical properties: According to JIS K6253: 1997 (hardness; durometer A instant) corresponding to ISO 7619 : 2004

According to JIS K6251: 2010 (tensile strength, elongation at break) corresponding to ISO 37 : 2005

A test piece in the size of 250 x 120 x 2 mm was used

Dipping test: Two test pieces in the size of 50 x 20 x 0.2 mm were fixed by piercing them with an iron insect pin, and salt water dipping, drying, and tap water dipping were performed according to the following procedures a to c. Then, the volume change coefficient before and after the test was calculated
a. Dipped in 50 ml of 5 wt.% salt water at 70°C for 70 hours
   - simulation of exposure of an oil seal by an antifreezing agent spray during running on a snow covered road -
b. Dried at ordinary temperature (23°C) for 12 hours
   - simulation of a condition after running on a road on which no antifreezing agent is sprayed and before washing -
c. Dipped in 50 ml of tap water at 23°C for 70 hours
   - simulation of washing with tap water to prevent rust of metal vehicle parts -

### Example 2

In Example 1, the amount of N,N'-di-2-naphthyl-p-phenylenediamine was changed to 1 part by weight.

### Example 3

In Example 1, 1 part by weight of dilauryl thiodipropionate (Nocrac 400, produced by Ouchi Shinko Chemical Industrial Co., Ltd.) was used in place of N,N'-di-2-naphthyl-p-phenylenediamine.

### Comparative Example 1

In Example 1, the diphenylamine reaction product with styrene and 2,4,4-trimethylpentene, and N,N'-di-2-naphthyl-p-phenylenediamine were not used.

### Comparative Example 2

In Example 1, the N,N'-di-2-naphthyl-p-phenylenediamine was not used.

### Comparative Example 3

In Example 1, the diphenylamine reaction product with styrene and 2,4,4-trimethylpentene was not used.

### Comparative Example 4

In Example 1, the same amount (4 parts by weight) of octylated diphenylamine (Nocrac AD-F, produced by Ouchi Shinko Chemical Industrial Co., Ltd.) was used in place of the diphenylamine reaction product with styrene and 2,4,4-trimethylpentene.

### Comparative Example 5

In Example 1, 6 parts by weight of 4,4'-bis(α,α-dimethylbenzyl)diphenylamine (Nocrac CD, produced by Ouchi Shinko Chemical Industrial Co., Ltd.) was used in place of the diphenylamine reaction product with styrene and 2,4,4-trimethylpentene.

### Comparative Example 6

In Example 1, the amount of N,N'-di-2-naphthyl-p-phenylenediamine was changed to 3 part by weight.

### Comparative Example 7

In Example 3, the amount of dilauryl thiodipropionate was changed to 3 parts by weight, and the diphenylamine reaction product with styrene and 2,4,4-trimethylpentene was not used.

Table below shows the results obtained in the above Examples and Comparative Examples.

**Table**

| Measurement· | Example | | | Comparative Example | | | | | | |
|---|---|---|---|---|---|---|---|---|---|---|
| evaluation item | 1 | 2 | 3 | 1 | 2 | 3 | 4 | 5 | 6 | 7 |
| [Compound characteristics] | | | | | | | | | | |
| Mooney viscosity | 42 | 41 | 42 | 47 | 43 | 39 | 45 | 44 | 44 | 47 |
| Scorch time (min) | 7.5 | 9.8 | 9.2 | 10.4 | 10.9 | 9.7 | 6.8 | 7.1 | 4.6 | 5.4 |

| [Normal state physical properties] | | | | | | | | | | |
|---|---|---|---|---|---|---|---|---|---|---|
| Hardness (Duro A) | 75 | 75 | 74 | 76 | 75 | 74 | 75 | 75 | 75 | 74 |
| Tensile strength (MPa) | 14.7 | 14.1 | 14.0 | 14.6 | 15.2 | 14.0 | 14.2 | 15.0 | 14.9 | 13.5 |
| Elongation at break (%) | 270 | 280 | 310 | 250 | 290 | 280 | 270 | 260 | 270 | 250 |

| [Dipping test] | | | | | | | | | | |
|---|---|---|---|---|---|---|---|---|---|---|
| Volume change (%) | +2.9 | +3.2 | +3.3 | +11.2 | +7.3 | +6.7 | +7.1 | +6.2 | +2.7 | +2.7 |

The above results demonstrate the following:
(1) In all of the Examples, the scorch time T5 is as long as 7 minutes or more, and the volume change coefficient after the dipping test is as small as 3.3% or less. Thus, the obtained vulcanizates are excellent in both of these characteristics.
(2) When an antioxidant is not used, the volume change coefficient after the dipping test is very large, and the salt water resistance is inferior (Comparative Examples 1).
(3) With the composition specified in Patent Document 1, when only one antioxidant used in the Examples of Patent Document 1, i.e., a diphenylamine reaction product with styrene and 2,4,4-trimethylpentene, is added, the rubber is significantly swollen after the dipping test, and the salt water resistance is inferior (Comparative Example 2).
(4) When only N,N'-di-2-naphthyl-p-phenylenediamine is added as the antioxidant, the swelling of the rubber after the dipping test is significant, and the salt water resistance is inferior (Comparative Example 3).
(5) When an amine based antioxidant that is not a diphenylamine reaction product with styrene and 2,4,4-trimethylpentene is added to N,N'-di-2-naphthyl-p-phenylenediamine, the swelling of the rubber after the dipping test cannot be suppressed, and the salt water resistance is inferior (Comparative Examples 4 and 5).
(6) Even when a diphenylamine reaction product with styrene and 2,4,4-trimethylpentene, and N,N'-di-2-naphthyl-p-phenylenediamine are used, if the amount of N,N'-di-2-naphthyl-p-phenylenediamine is the specified amount or more, the swelling of the rubber after the dipping test can be suppressed; however, the scorch time T5 becomes shorter, and the compound storage properties or the vulcanizing and molding properties become inferior (Comparative Example 6).
(7) When only dilauryl thiodipropionate is added as an antioxidant in an amount of the specified amount or more, the swelling of the rubber after the dipping test can be suppressed; however, the scorch time T5 becomes shorter, and the compound storage properties or the vulcanizing and molding properties become inferior (Comparative Example 7).

### INDUSTRIAL APPLICABILITY

The rubber vulcanization molded product that is vulcanization-molded from the nitrile rubber composition of the present invention is a material that satisfies muddy water resistance, salt water resistance, sealing properties, and lower torque, and can therefore be effectively used as a muddy water sealing material for vehicle hub bearings.

## Claims

1. A nitrile rubber composition comprising 5 to 50 parts by weight of SRF or HAF carbon black, 5 to 60 parts by weight of graphite having an average particle diameter of 5 µm or less, 5 to 50 parts by weight of Ketjenblack or acetylene black, and, as antioxidants, 1 to 5 parts by weight of alkylated diphenylamine comprising a diphenylamine reaction product with styrene and 2,4,4-trimethylpentene, and 0.5 to 2.5 parts by weight of N,N'-di-2-naphthyl-p-phenylenediamine or dilauryl thiodipropionate, based on 100 parts by weight of nitrile rubber.

2. The nitrile rubber composition according to claim 1, wherein SRF or HAF carbon black, graphite, and Ketjenblack or acetylene black are used in a total amount of 15 to 100 parts by weight based on 100 parts by weight of nitrile rubber.

3. A rubber vulcanization molded product that is vulcanization-molded from the nitrile rubber composition according to claim 1.

4. The rubber vulcanization molded product according to claim 3, which is used as a sealing material.

5. The vulcanization molded product according to claim 4, which is used as a rolling bearing oil seal.

## Patentansprüche

1. Nitrilkautschukzusammensetzung, umfassend 5 bis 50 Gewichtsteile SRF- oder HAF-Ruß, 5 bis 60 Gewichtsteile Graphit mit einem durchschnittlichen Partikeldurchmesser von 5 µm oder weniger, 5 bis 50 Gewichtsteile Ketjenblack oder Acetylenruß und, als Antioxidantien, 1 bis 5 Gewichtsteile alkyliertes Diphenylamin, umfassend ein Diphenylaminreaktionsprodukt mit Styrol und 2,4,4-Trimethylpenten, und 0,5 bis 2,5 Gewichtsteile N,N'-Di-2-naphthyl-p-phenylendiamin oder Dilaurylthiodipropionat, basierend auf 100 Gewichtsteilen Nitrilkautschuk.

2. Nitrilkautschukzusammensetzung gemäß Anspruch 1, wobei SRF- oder HAF-Ruß, Graphit und Ketjenblack oder Acetylenruß in einer Gesamtmenge von 15 bis 100 Gewichtsteilen, basierend auf 100 Gewichtsteilen Nitrilkautschuk, verwendet werden.

3. Kautschukvulkanisationsformprodukt, das aus der Nitrilkautschukzusammensetzung gemäß Anspruch 1 vulkanisationsgeformt ist.

4. Kautschukvulkanisationsformprodukt gemäß Anspruch 3, welches als ein Dichtungsmaterial verwendet wird.

5. Vulkanisationsformprodukt gemäß Anspruch 4, welches als Öldichtung eines Wälzlagers verwendet wird.

## Revendications

1. Composition de caoutchouc nitrile comprenant 5 à 50 parties en poids de noir de carbone SRF ou HAF, 5 à 60 parties en poids d'un graphite présentant un diamètre particulaire moyen de 5 µm ou moins, 5 à 50 parties en poids de noir de Ketjen ou de noir d'acétylène, et, comme antioxydants, 1 à 5 parties en poids d'une diphénylamine alkylée comprenant un produit réactionnel de la diphénylamine avec le styrène et le 2, 4, 4-triméthylpentène, et 0,5 à 2,5 parties en poids de N,N'-di-2-naphtyl-p-phénylènediamine ou de thiodipropionate de dilauryle, sur la base de 100 parties en poids de caoutchouc nitrile.

2. Composition de caoutchouc nitrile selon la revendication 1, dans laquelle le noir de carbone SRF ou HAF, le graphite, et le noir de Ketjen ou le noir d'acétylène sont utilisés en une quantité totale de 15 à 100 parties en poids sur la base de 100 parties en poids de caoutchouc nitrile.

3. Produit moulé par vulcanisation d'un caoutchouc qui est moulé par vulcanisation à partir de la composition de caoutchouc nitrile selon la revendication 1.

4. Produit moulé par vulcanisation d'un caoutchouc selon la revendication 3, qui est utilisé comme matériau d'étanchéité.

5. Produit moulé par vulcanisation selon la revendication 4, qui est utilisé comme joint d'huile de palier à roulement.
